# EUROPÄISCHE PATENTSCHRIFT

(11) **EP 1 152 005 B1**
(45) Veröffentlichungstag und Bekanntmachung des Hinweises auf die Patenterteilung: **02.07.2003**
(21) Anmeldenummer: 01110407.2
(22) Anmeldetag: 27.04.2001
(51) Int. Cl.: C07F 9/6571

(54) **Verfahren zur Herstellung von substituierten 10-Chlor-phenoxaphosphinen oder 10-Brom-phenoxaphosphinen**
Preparation Process for substituted 10-Chloro-phenoxaphosphines or 10-Bromo-phenoxaphosphines
Méthode de préparation de 10-chloro-phenoxaphosphines ou 10-bromo-phenoxaphosphines substituées

(30) Priorität: 06.05.2000 DE 10022186
(43) Veröffentlichungstag der Anmeldung: 07.11.2001
(73) Patentinhaber: Celanese Chemicals Europe GmbH, 60439 Frankfurt am Main (DE)
(72) Erfinder: Herwig, Jürgen, Dr., 46569 Hünxe (DE); Skutta, Peter, 46145 Oberhausen (DE); Sturm, Stefanie, 46539 Dinslaken (DE)

(56) Entgegenhaltungen:
- HELLWINKEL, DIETER ET AL: "Polycyclic triaryldioxyphosphoranes of extreme stability" CHEM. BER. (1978), 111(1), 13-41 , XP001013580
- VAN DER VEEN, LARS A. ET AL: "New Phosphacyclic Diphosphines for Rhodium-Catalyzed Hydroformylation" ORGANOMETALLICS (1999), 18(23), 4765-4777 , XP000964505
- VAN DER VEEN, LARS A. ET AL: "Hydroformylation of internal olefins to linear aldehydes with novel rhodium catalysts" ANGEW. CHEM., INT. ED. (1999), 38(3), 336-338 , XP000960496

## Beschreibung

Die vorliegende Erfindung betrifft ein effizientes Verfahren zur Herstellung von 10-Chlor-phenoxaphosphinen oder 10-Brom-phenoxaphosphinen durch Umsetzung von substituierten Diphenylethern mit Phosphortrihalogenid in Gegenwart einer oder mehrerer Lewissäuren und anschließender Behandlung mit einem Amin.

10-Chlor-phenoxaphosphine und 10-Brom-phenoxaphosphine stellen wichtige Intermediate für die Synthese von metallorganischen Komplexliganden sowie für die Synthese von Phenoxaphosphinsäuren dar. Komplexliganden bilden in der homogenen Katalyse einen wesentlichen Bestandteil des Katalysatorsystemes. Phenoxaphosphinderivate finden als Bausteine für Komplexliganden bei vielfältigen katalytischen Reaktionen wie z.B. Hydroformylierungen, Hydrierungen, Hydroxycarbonylierungen, Alkoxycarbonylierungen oder allylischen Alkylierungen Verwendung, wobei zum Teil extrem hohe Selektivitäten bei gleichzeitig hohen Umsätzen und Turn-over-Frequenzen des Katalysatorsystemes erreicht werden können.

So beschreiben z. B. Hobbs et al. in J. Org. Chem., Vol. 46, 4424 (1981) die asymmetrische Rhodium-katalysierte Hydroformylierung von Vinylacetat unter Verwendung eines DIOP-Derivates als Liganden, der zwei Phenoxaphosphin-Bausteine enthält.

Aus der Literatur sind bereits Verfahren zur Herstellung von 10-Chlor-phenoxaphosphinen bekannt.

Freedman et al. beschreiben in J. Org. Chem. 1961, Vol. 26, 284 die Umsetzung von p-Tolylether mit Phosphortrichlorid und Aluminiumtrichlorid. Das Reaktionsprodukt nach der wäßrigen Aufarbeitung wurde als die 2, 8-Dimethyl-phenoxaphosphinsäure identifiziert.

Die 2,8-Dimethyl-phenoxaphosphinsäure läßt sich analog der Vorschrift von Hellwinkel und Krapp in Chem. Ber. 1978, Vol. 111, 13 für Dibenzophospholsäure durch Umsetzung mit Phosphoroxychlorid bei 200 °C und anschließender Umsetzung mit rotem Phosphor bei 180 °C in das 10-Chlor-2,8-dimethylphenoxaphosphin überführen. Die Synthese aus dem Ether ist somit dreistufig und die Gesamtausbeute beträgt 59,6 % über alle Stufen. Damit ist eine wirtschaftliche Herstellung der Verbindung nicht möglich.

Da die substituierten 10-Chlor-phenoxaphosphine auf den bisher beschriebenen Wegen nur in mehrstufigen Synthesen herstellbar waren, bestand ein großer Bedarf an einem kostengünstigen Verfahren, das substituierte 10-Chlor-phenoxaphosphine bzw. die entsprechenden 10-Brom-phenoxaphosphine in hoher Ausbeute und Reinheit in technisch einfach Weise zugänglich macht.

Die Erfindung besteht daher in einem Verfahren zur Herstellung von substituierten 10-Chlor-phenoxaphosphinen oder 10-Brom-phenoxaphosphinen durch Umsetzung von substituierten Diphenylethern mit einem Phosphortrihalogenid in Gegenwart einer oder mehrerer Lewissäuren, dadurch gekennzeichnet, daß die Reaktionsmischung nachfolgend mit einem Amin behandelt wird.

Es wurde überraschenderweise gefunden, daß der Zusatz von Aminen für eine Vielzahl von substituierten 10-Chlor-phenoxaphosphinen und 10-Brom-phenoxaphosphinen, die im folgenden als 10-Halogen-phenoxaphosphine genannt werden, eine einstufige Reaktionsführung unter milden Bedingungen und somit geringen Ausbeuteverlusten ermöglicht. Durch den Zusatz von Aminen kann der intermediär gebildete Komplex aus substituiertem 10-Chlorphenoxaphosphin und Metallchlorid bzw. von 10-Brom-phenoxaphosphin und Metallbromid unter wasserfreien Bedingungen gespalten werden, wodurch eine Hydrolyse der substituierten 10-Halogen-phenoxaphosphine (Halogen = Cl, Br) zur freien Säure verhindert werden kann. Die Umsetzung ist in der nachfolgenden Reaktionsgleichung wiedergegeben.

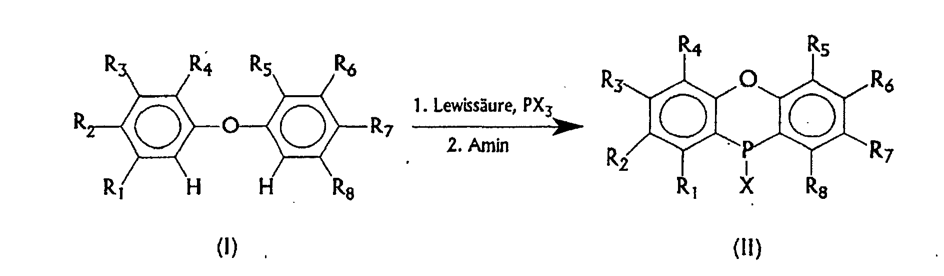

Die Substituenten der 10-Halogen-phenoxaphosphine der allgemeine Formel (II) und der als Ausgangsverbindung verwendeten Diphenylether (I) können über einen weiten Bereich variiert werden. So können R₁, R₃, R₄, R₅, R₆ und R₈ unabhängig voneinander Wasserstoff, C₁-C₂₂-Alkyl, C₁-C₂₂-Alkoxy, C₁-C₂₂-Acetoxy, C₁-C₂₂-Thio-alkoxy, C₁-C₂₂-Dithio-acetoxy, C₁-C₁₈-Aryloxy, C₁-C₁₈-Thio-aryloxy, Phenyl, Fluor, Chlor Brom, lod, O₂N, CF₃SO₃, CN, HCO, RSO₂, RSO, (C₁-C₈-Alkyl)₂N, (C₁-C₄-Alkyl)NH-CO, (C₁-C₄-Alkyl)CO, (C₁-C₈-Alkyl)COO, HCO-NH, (Phenyl)CO, (Phenyl)COO, (C₁-C₈-Alkyl)COO-CH=CH, Ar₂PO, wobei Ar sinngemäß für eine Phenyl-Gruppe oder eine Phenyl-Gruppe mit einem oder mehreren C₁-C₄-Alkyl-Substituenten am aromatischen Ring steht, bedeuten und R₂ und R₇ unabhängig voneinander C₁-C₂₂-Alkyl, C₁-C₂₂-Alkoxy, C₁-C₂₂-Acetoxy, C₁-C₂₂-Thio-alkoxy, C₁-C₂₂-Dithioacetoxy, C₁-C₁₈-Aryloxy, C₁-C₁₈-Thio-aryloxy, Phenyl, Fluor, Chlor Brom, lod, O₂N, CF₃SO₃, CN, HCO, RSO₂, RSO, (C₁-C₈-Alkyl)₂N, (C₁-C₄-Alkyl)NH-CO, (C₁-C₄-Alkyl)CO, (C₁-C₈-Alkyl)COO, HCO-NH, (Phenyl)CO, (Phenyl)COO, (C₁-C₈-Alkyl)COO-CH=CH, Ar₂PO, wobei Ar sinngemäß für eine Phenyl-Gruppe oder eine Phenyl-Gruppe mit einem oder mehreren C₁-C₄-Alkyl-Substituenten am aromatischen Ring steht, bedeuten. Der Substituent X im eingesetzten Phosphorhalogenid bzw. im Produkt (II) ist entweder Chlor oder Brom.

Bevorzugt setzt man substituierte Diphenylether mit Resten ein, bei denen R₁, R₃, R₄, R₅, R₆ und R₈ unabhängig voneinander Wasserstoff, C₁-C₂₂-Alkyl, C₁-C₂₂-Alkoxy, C₁-C₂₂-Acetoxy, C₁-C₁₈-Aryloxy, Phenyl, Fluor, Chlor Brom, O₂N, CF₃SO₃, CN bedeuten und R₂ und R₇ unabhängig voneinander C₁-C₂₂-Alkyl, C₁-C₂₂-Alkoxy, C₁-C₂₂-Acetoxy, C₁-C₁₈-Aryloxy, Phenyl, Fluor, Chlor Brom, O₂N, CF₃SO₃, CN bedeuten.

Besonders werden substituierte Diphenylether mit Resten verwendet, bei denen R₁, R₃, R₄, R₅, R₆ und R₈ unabhängig voneinander Wasserstoff, C₁-C₂₂-Alkyl, Phenyl, Fluor, Chlor bedeuten und R₂ und R₇ unabhängig voneinander C₁-C₂₂-Alkyl, Phenyl, Fluor, Chlor bedeuten. Besonders bevorzugtes Phosphorhalogenid ist Phorphortrichlorid. Besonders bevorzugter Substituent X im Produkt (II) ist Chlor.

Verbindungen, bei denen R₂ und/oder R₇ Wasserstoff-Reste sind, sind als Edukte für diese Reaktion wenig geeignet, da in diesem Fall eine Bindungsknüpfung unter Einschluß des Phosphor-Atoms auch in para-Position zur Ether-Brücke erfolgen kann. Die hierbei gebildeten Produkte führen zu durch intermolekulare Reaktion gebildete Phosphor-verbrückte Ketten anstelle von substituierten 10-Chlor-phenoxaphosphinen, die durch intramolekulare Cyclisierung gebildet werden.

Die Umsetzung von (I) mit dem Phosphortrihalogenid in Gegenwart einer oder mehrerer Lewissäuren wird bei einer Temperatur von 0 bis 200 °C, bevorzugt 0 bis 150 °C und besonders bevorzugt bei 50 bis 120 °C durchgeführt.

Zwar ist es entsprechend dem erfindungsgemäßen Verfahren möglich, ein Phosphorhalogenid und eine Lewissäure mit unterschiedlichen HalogenSubstituenten einzusetzen, jedoch kann dies infolge von Halogen-Austauschreaktionen zur Bildung eines Gemisches von Brom- und Chlor-Derivaten führen.

Das erfindungsgemäße Verfahren wird im allgemeinen bei Drücken von 0,1 bis 2 MPa durchgeführt. Bevorzugt ist eine Reaktionsführung bei Atmosphärendruck. Umsetzungen bei erhöhtem Druck dienen im wesentlichen der Erhöhung des Siedepunktes des optional verwendeten Lösemittels, um die optimale Reaktionstemperatur einzustellen zu können.

Um vollständigen Umsatz zu erreichen, muß das Phosphorhalogenid mindestens im stöchiometrischen Verhältnis zum substituierten Diphenylether zugesetzt werden. Deutliche Überschüsse schaden nicht. Sie werden zusammen mit einem eventuell verwendeten Lösungsmittel nach Vervollständigung der Umsetzung und vor Zugabe des Amins zweckmäßigerweise abdestilliert. Überschüsse des Phosphorhalogenids können als weiterer Lösungsvermittler oder als vollständiger Ersatz eines inerten Lösungsmittels dienen.

Als Lewissäuren können Halogenide der III. Hauptgruppe sowie der VIII., I. und II. Nebengruppe des Periodensystems der Elemente, insbesondere Zinkhalogenide, Kupferhalogenide, Eisenhalogenide und Aluminiumhalogenide verwendet werden. Besonders bevorzugt sind Zink-II-chlorid, Kupfer-IIchlorid, Aluminiumtrichlorid, Aluminiumtribromid und Eisen-II-chlorid.

Die Lewisäuren lassen sich in Form der reinen Salze sowie auf Trägermaterialien, wie z.B. Kieselgel, einsetzen.

Für die Durchführung des erfindungsgemäßen Verfahrens wird die Lewissäure im allgemeinen im bis zu 1,5-fachen molaren Überschuß zum Diphenylether eingesetzt. Ein höherer Überschuß ist zwar prinzipiell möglich, aber aus ökonomischen und ökologischen Gründen nicht sinnvoll. Bevorzugt wird bei einem bis zu 1,2-fachen molaren Überschuß der Lewissäure, besonders bevorzugt ist ein maximal äquimolarer Einsatz der Lewissäure bezogen auf den Diphenylether. Es ist aber auch möglich, die Lewissäure in einer geringeren als der stöchiometrisch erforderlichen Menge einzusetzen.

Überraschenderweise wurde gefunden, daß bereits bei einem Molverhältnis von Lewissäure zu Diphenylether von 0,7 : 1 Ausbeuten an 10-Halogen-phenoxaphosphin der allgemeinen Formel (II) von 80 % erhalten werden.

Die Reaktion kann sowohl mit, also auch ohne Lösungsmittel durchgeführt werden. Als Lösungsmittel kommen aliphatische Ether und inerte Kohlenwasserstoffe in Betracht. Als Beispiele für aliphatische Ether und inerte Kohlenwasserstoffe seien hier Toluol, Tetrahydrofuran, Diethylether, Hexan, Cyclohexan, Pentan, Benzol genannt, ohne die Erfindung auf diese zu beschränken. Die Menge an Lösungsmittel wird so gewählt, daß die Konzentration von Diarylethem bei 0,1 bis 80 Gewichtsprozent liegt. Bevorzugt ist die Durchführung der Reaktion ohne Lösungsmittel.

Der Komplex aus dem 10-Halogen-phenoxaphosphin und der Lewissäure wird nach Vervollständigung der Reaktion durch Zugabe eines Amins gespalten. Bevorzugt verwendet man hierzu ein Trialkylamin, welches drei bis 12 C-Atome enthält, ein gemischtes tertiäres Alkylarylamin, welches 8 bis 22 C-Atome enthält, ein alicyclisches Amin, welches vier bis 8 C-Atome und gegebenenfalls Sauerstoff als weiteres Heteroatom enthält, oder ein heterocydischen Amin, welches 4 bis 22 C-Atome enthält. Beispiele hierfür sind Trimethylamin, Triethytamin, Tri-n-butylamin, N,N-Dimethylanilin, Pyridin, α-Picolin, Morpholin, Piperidin und Chinolin. Besonders bevorzugte Amine zur Freisetzung des 10-Halogen-phenoxaphosphins sind Triethylamin und Pyridin.

Die Amine werden im allgemeinen in Mengen von 0,5 bis 5 Mol-Äquivalenten, bevorzugt in Mengen von 0,9 bis 3, besonders bevorzugt in Mengen von 1 bis 2,5 Mol-Äquivalenten bezogen auf die eingesetzte Lewissäure der Reaktionsmischung zugesetzt.

Die Amine lassen sich je nach vorliegendem Aggregatzustand in Form der reinen Flüssigkeit oder des reinen Feststoffs einsetzen.

Die Spaltung des 10-Halogen-phenoxaphosphin-Lewissäure-Komplexes wird bei einer Temperatur von -100 bis 100 °C, bevorzugt bei -100 bis 50 °C, besonders bevorzugt bei -50 bis 25 °C durchgeführt.

Danach wird das 10-Halogen-phenoxaphosphin mit einem Lösungsmittel extrahiert. Nach Abfiltrieren des abgeschiedenen Lewissäure-Amin-Adduktes und Entfemung des Lösungsmittels aus dem Filtrat bleibt das 10-Halogen-phenoxaphosphin als Feststoff oder Öl zurück. Als Lösungsmittel kommen aliphatische Ether, und inerte Kohlenwasserstoffe in Betracht. Als Beispiele für aliphatische Ether und inerte Kohlenwasserstoffe seien hier Toluol, Tetrahydrofuran, Diethylether, Hexan, Cyclohexan, Pentan, Benzol genannt, ohne die Erfindung auf diese zu beschränken.

Die folgenden Beispiele soll das Verfahren erläutern, ohne seine Anwendbarkeit darauf zu beschränken.

### Beispiele

### Beispiel 1:

59.4 g (0.3 mol) p-Tolylether [4,4'-Dimethyl-diphenylether], 165 g (1.2 mol) Phosphortrichlorid und 51 g (0.38 mol) wasserfreies Aluminiumtrichlorid (vorsichtig zugeben) werden 8 h unter Rückfluß erhitzt. Dann wird der Überschuß Phosphortrichlorid abdestilliert und zum festen Rückstand 100 ml Toluol gegeben und wieder abdestilliert. Anschließend wird der Rückstand in Toluol (250 mL) suspendiert und Pyridin (64 ml; 0,79 mol) langsam bei -10 °C zugetropft, wobei ein hellgelber Niederschlag entsteht. Der Niederschlag, bestehend aus dem Lewissäure-Pyridin-Addukt, wird abfiltriert. Nach zweimaliger Wäsche mit Toluol (je 50 mL) wird die Waschlösung mit dem gelben Filtrat vereinigt und im Vakuum getrocknet Es bleibt ein schwach gelb gefärbter Feststoff zurück. Ausbeute: 83%.
¹H NMR (CDCl₃; ppm): δ =7.52 (d, 2H, J = 7.3 Hz), 7.29 (d, 2H, J = 7.4 Hz), 7.16 (d, 2H, J = 5.7 Hz), 2.33 (s, 6H). ³¹P NMR (CDCl₃; ppm): δ = 37.7.

### Beispiel 2

10,0 g (0.05 mol) p-Tolylether [4,4'-Dimethyl-diphenylether], 39 g (0,28 mol) Phosphortrichlorid und 3,3 g (0,025 mol) wasserfreies Aluminiumtrichlorid werden 11 h unter Rückfluß erhitzt. Dann wird der Überschuß Phosphortrichlorid abdestilliert und zum festen Rückstand 25 ml Toluol gegeben und wieder abdestilliert. Anschließend wird der Rückstand in Toluol (50 mL) suspendiert und Pyridin (4,0 g; 0,05 mol) langsam bei 0 °C zugetropft, wobei ein weißlich - gelber Niederschlag entsteht. Es wird 4 h nachgerührt. Der Niederschlag, bestehend aus dem Lewissäure-Pyridin-Addukt, wird abfiltriert.

Nach zweimaliger Wäsche mit Toluol (je 10 mL) wird die Waschlösung mit dem Filtrat vereinigt und das Lösungsmittel im Vakuum abgezogen. Es bleibt ein schwach gelb gefärbter Feststoff zurück. Ausbeute: 10,6 g (80 %) der Theorie.

### Beispiel 3

40,0 g (0.20 mol) p-Tolylether, 113,3 g (0,82 mol) Phosphortrichlorid und 40 g (0.30 mol) wasserfreies Aluminiumtrichlorid (vorsichtig zugeben) werden 8 h unter Rückfluß erhitzt. Dann wird der Überschuß Phosphortrichlorid abdestilliert und der feste Rückstand zweimal mit 200 ml Toluol gewaschen. Anschließend wird der Rückstand in Toluol (180 mL) suspendiert und langsam bei -10 °C Triethylamin (30,3 g, 0,3 mol) zugetropft. Der entstehende Niederschlag, bestehend aus dem Lewissäure-Pyridin-Addukt, wird abfiltriert. Nach zweimaliger Wäsche mit Toluol (je 100 mL) wird die Waschlösung mit dem gelben Filtrat vereinigt und im Vakuum getrocknet. Es bleibt ein schwach gelb gefärbter Feststoff zurück.
Ausbeute: 34,4 g (65,5 %) der Theorie.

## Patentansprüche

1. Verfahren zur Herstellung von substituierten 10-Chlor-phenoxaphosphinen oder 10-Brom-phenoxaphosphinen durch Umsetzung von substituierten Diphenylethem mit einem Phosphortrihalogenid in Gegenwart einer oder mehrerer Lewissäuren, **dadurch gekennzeichnet, daß** die Reaktionsmischung nachfolgend mit einem Amin behandelt wird.

2. Verfahren nach Anspruch 1, **dadurch gekennzeichnet, daß** die Umsetzung der substituierten Diphenylether mit einem Phosphortrihalogenid in Gegenwart einer oder mehrerer Lewissäuren bei einer Temperatur von 0° bis 200° C, bevorzugt bei einer Temperatur von 0° - 150° C, besonders bevorzugt bei einer Temperatur von 50 bis 120° C durchgeführt wird.

3. Verfahren nach den Ansprüchen 1 und 2, **dadurch gekennzeichnet, daß** die Umsetzung der substituierten Diphenylether mit einem Phosphortrihalogenid in Gegenwart einer oder mehrerer Lewissäuren bei einem Druck von 0,1 bis 2 MPa durchgeführt wird.

4. Verfahren nach einem der Ansprüche 1 bis 3, **dadurch gekennzeichnet, daß** das Phosphortrihalogenid in mindestens stöchiometrischem Verhältnis zum Diphenylether eingesetzt wird.

5. Verfahren nach einem der Ansprüche 1 bis 4, **dadurch gekennzeichnet, daß** die Lewissäure im bis zu 1,5-fachen stöchiometrischen Überschuß, bevorzugt im 1,2-fachen stöchiometrischen Überschuß, besonders bevorzugt im maximal äquimolaren Verhältnis zum substituierten Diphenylether eingesetzt wird.

6. Verfahren nach einem der Ansprüche 1 bis 5, **dadurch gekennzeichnet, daß** als Phosphorhalogenid Phosphortrichlorid eingesetzt wird.

7. Verfahren nach einem der Ansprüche 1 bis 6, **dadurch gekennzeichnet, daß** die Umsetzung des substituierten Diphenylethers mit Phosphortrihalogenid und einer oder mehrerer Lewissäuren gegebenenfalls in Gegenwart eines Lösungsmittels durchgeführt wird.

8. Verfahren nach einem der Ansprüche 1 bis 7, **dadurch gekennzeichnet, daß** die Reaktionsmischung nachfolgend bevorzugt mit einem Trialkylamin, welches drei bis 12 C-Atome enthält, einem gemischten tertiären Alkylarylamin, welches 8 bis 22 C-Atome enthält, ein alicyclisches Amin, welches vier bis 8 C-Atome und gegebenenfalls Sauerstoff als weiteres Heteroatom enthält oder einem heterocyclischen Amin, welches 4 bis 22 C-Atome enthält, besonders bevorzugt mit Triethylamin oder Pyridin behandelt wird.

9. Verfahren nach einem der Ansprüche 1 bis 8, **dadurch gekennzeichnet, daß** das Amin in einem molaren Verhältnis von 0,5 : 1 bis 5 : 1, bevorzugt in einem Verhältnis von 0,9 : 1 bis 3 : 1, besonders bevorzugt von 1 : 1 bis 2,5 : 1 bezogen auf die Lewissäure eingesetzt wird.

10. Verfahren nach einem der Ansprüche 1 bis 9, **dadurch gekennzeichnet, daß** der Zusatz des Amins bei einer Temperatur von -100° bis 100° C, bevorzugt bei einer Temperatur von -100° bis 50° C, besonders bevorzugt bei einer Temperatur von -50° bis 25° C durchgeführt wird.

## Claims

1. A process for the preparation of substituted 10-chloro-phenoxaphosphines or 10-bromo-phenoxaphosphines by reacting a substituted diphenyl ether with a phosphorus trihalide in the presence of at least one Lewis acid wherein the resulting product is reacted with an amine.

2. The process of claim 1, wherein the reaction of the substituted diphenyl ether and a phosphorus trihalide in the presence of at least one Lewis acid is carried out at a temperature of 0 to 200°C, preferably of 0 to 150°C, and particular preferably of 50 to 120°C.

3. The process of claim 1 or 2 wherein the reaction of the substituted diphenyl ether and phosphorus trihalide in the presence of at least one Lewis acid is carried out at a pressure of 0.1 to 2 MPa.

4. The process of one of claims 1 to 3 wherein the phosphorus trihalide is used in at least stoichiometric equivalents of the diphenyl ether.

5. The process of one of claims 1 to 4 wherein the Lewis acid is used in up to 1.5 fold stoichiometric excess of the substituted diphenyl ether, preferably in 1.2 fold stoichiometric excess and particular preferably in stoichiometric equivalents of the substituted diphenyl ether.

6. The process of one of claims 1 to 5 wherein phosphorus trichloride is the phosphorus halide.

7. The process of one of claims 1 to 6 wherein the reacting of the substituted diphenyl ether and phosphorus trihalide and at least one Lewis acid is carried out in the presence of a solvent.

8. The process of one of claims 1 to 7 wherein the amine is selected from the group consisting of trialkylamine of 3 to 12 carbon atoms, mixed tertiary alkylarylamine of 8 to 22 carbon atoms, alicyclic amine of 4 to 8 carbon atoms optionally with an oxygen heteroatom and a heterocyclic amine of 4 to 22 carbon atoms, preferably triethylamine and pyridine.

9. The process of one of claims 1 to 8 wherein the molar ratio of amine to Lewis acid is 0.5:1 to 5:1, preferably 0.9:1 to 3:1, and particular preferably 1:1 to 2.5:1.

10. The process of one of claims 1 to 9 wherein the amine addition is effected at a temperature at -100°C to 100°C, preferably at -100°C to 50°C, and particular preferably at -50°C to 25°C.

## Revendications

1. Procédé pour la préparation de 10-chlorophénoxaphosphines substituées ou de 10-bromophénoxaphosphines substituées, par la réaction d'éthers diphényliques substitués avec un trihalogénure de phosphore, en présence d'un ou plusieurs acides de Lewis, **caractérisé en ce que** le mélange réactionnel est ensuite traité par une amine.

2. Procédé selon la revendication 1, **caractérisé en ce que** la réaction des éthers diphényliques substitués, avec un trihalogénure de phosphore en présence d'un ou plusieurs acides de Lewis, est effectuée à une température de 0 à 200°C, de préférence à une température de 0 à 150°C, de façon particulièrement préférée à une température de 50 à 120°C.

3. Procédé selon les revendications 1 et 2, **caractérisé en ce que** la réaction des éthers diphényliques substitués, avec un trihalogénure de phosphore en présence d'un ou plusieurs acides de Lewis, est effectuée sous une pression de 0,1 à 2 MPa.

4. Procédé selon l'une quelconque des revendications 1 à 3, **caractérisé en ce que** le trihalogénure de phosphore est utilisé en une proportion au moins stoechiométrique par rapport à l'éther diphénylique.

5. Procédé selon l'une quelconque des revendications 1 à 4, **caractérisé en ce que** l'acide de Lewis est utilisé en un excès jusqu'à 1,5 fois stoechiométrique, de préférence en un excès 1,2 fois stoechiométrique, de façon particulièrement préférée en une proportion maximale équimolaire par rapport à l'éther diphénylique substitué.

6. Procédé selon l'une quelconque des revendications 1 à 5, **caractérisé en ce qu'**on utilise comme halogénure de phosphore du trichlorure de phosphore.

7. Procédé selon l'une quelconque des revendications 1 à 6, **caractérisé en ce que** la réaction de l'éther diphénylique substitué avec le trihalogénure de phosphore et un ou plusieurs acides de Lewis est effectuée éventuellement en présence d'un solvant.

8. Procédé selon l'une quelconque des revendications 1 à 7, **caractérisé en ce que** le mélange réactionnel est ensuite traité de préférence par une trialkylamine qui contient de 3 à 12 atomes de carbone, une alkylarylamine tertiaire mixte qui contient de 8 à 22 atomes de carbone, une amine alicyclique qui contient de 4 à 8 atomes de carbone et éventuellement de l'oxygène comme autre hétéroatome, ou une amine hétérocyclique qui contient de 4 à 22 atomes de carbone, de façon particulièrement préférée, par la triéthylamine ou la pyridine.

9. Procédé selon l'une quelconque des revendications 1 à 8, **caractérisé en ce que** l'amine est utilisée en un rapport molaire de 0,5:1 à 5:1, de préférence en un rapport de 0,9:1 à 3:1, de façon particulièrement préférée de 1:1 à 2,5:1, relativement à l'acide de Lewis.

10. Procédé selon l'une quelconque des revendications 1 à 9, **caractérisé en ce que** l'addition de l'amine est effectuée à une température de -100 à 100°C, de préférence à une température de -100 à 50°C, de façon particulièrement préférée à une température de -50 à 25°C.
